## Europäisches Patentamt

## European Patent Office

## Office européen des brevets

(19)

(11) Veröffentlichungsnummer: **0 010 176**
**B1**

(12) **EUROPÄISCHE PATENTSCHRIFT**

(45) Veröffentlichungstag der Patentschrift:
25.11.81

(51) Int. Cl.³: **A 01 J 5/04**

(21) Anmeldenummer: **79103533.0**

(22) Anmeldetag: **19.09.79**

(54) Verfahren zum selbsttätigen Ausmelken beim maschinellen Milchentzug.

(30) Priorität: **12.10.78 DE 2844562**

(43) Veröffentlichungstag der Anmeldung:
**30.04.80 Patentblatt 80/9**

(45) Bekanntmachung des Hinweises auf die Patenterteilung:
**25.11.81 Patentblatt 81/47**

(84) Benannte Vertragsstaaten:
**AT BE CH FR GB IT NL SE**

(56) Entgegenhaltungen:
**DE-A1-2 414 107**
**DE-A1-2 524 398**
**DE-A1-2 646 596**
**DE-A1-2 713 269**
**DE-B-1 278 166**
**DE-C3-1 956 196**
**DE-C3-2 539 868**
**LANDTECHNIK, Band 33, Nr. 9,**
**September 1978, Lehrte/Hannover**
**W. WEBER »Zum Einfluß melkmaschinentech-**
**nischer Parameter auf die Milchabgabe der Kuh«,**
**Seiten 391 bis 394**

(73) Patentinhaber: **BIO-MELKTECHNIK SWISS Hoefelmayr & Co., Steinwichslenstrasse 20, CH-9052 Niederteufen (CH)**

(72) Erfinder: **Hoefelmayr, Tilman, Dr., Steinwichslenstrasse 20, CH-9052 Niederteufen (CH)**

(74) Vertreter: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 43, D-8000 München 22 (DE)**

## Verfahren zum selbsttätigen Ausmelken beim maschinellen Milchentzug

Die Erfindung betrifft ein Verfahren zum selbsttätigen Ausmelken beim maschinellen Milchentzug, bei dem die in ein elastisches Zitzengummi des Melkbechers eingeführte Zitze einem vorbestimmten Unterdruck ausgesetzt wird, an einem Zwischenraum zwischen einem Melkbechergehäuse und dem die Zitze umschließenden Zitzengummi ein pulsierender Unterdruck angelegt wird, eine fortlaufende Milchflußmessung vorgenommen und die Melkintensität in Abhängigkeit von dem Meßergebnis herabgesetzt wird.

Für eine wirtschaftliche Milchproduktion ist die Vollständigkeit der Euterentleerung von größter Bedeutung. Dabei geht es nicht nur um die bei jedem Melken unmittelbar gewonnenen Milch- und Fettmengen. Der Grad der Euterentleerung beeinflußt auch den Verlauf der Laktationskurve, also das Durchhaltevermögen der Kuh und der Milchleistung in den nachfolgenden Laktationsabschnitten. Weiterhin weisen schlecht entleerte Euter vermehrt Euterkrankheiten auf.

Voraussetzung für einen möglichst hohen Grad der Euterentleerung sind neben einer vollwertigen Stimulation des Milchejektionsprozesses der Kuh und einem schonenden und schnellen Milchentzug eine möglichst vollständige Gewinnung der losen Restmilch (Nachgemelk) am Ende des Melkprozesses.

Das Nachgemelk-Phänomen erklärt sich aus dem anatomischen Aufbau des Euters. Zwischen dem großen Milchspeicherraum des Euters (Drüsenzisterne) und dem kleineren Speicherraum der einzelnen Zitze (Zitzenzisterne) befindet sich in der Höhe der Zitzenbasis eine innere Ringfalte (Fürstenbergscher Venenring). Am unteren Ende der Zitze schließt sich an die Zitzenzisterne der im Normalzustand geschlossene Strichkanal an, der die Mündung der Zitze nach außen bildet. Beim Melken ist während des vollen Milchflusses die Ringfalte zwischen Drüsen- und Zitzenzisterne weit geöffnet. Die Länge und radiale Dehnbarkeit des Strichkanals bestimmt den Melkwiderstand (Strömungswiderstand) an dem Euter. Dies bedeutet, daß sich das Melkvakuum nicht in die Zitzenzisterne fortsetzt. Der Zitzeninnendruck bei einer melkbereiten Kuh liegt zwischen etwa 30 – 60 mbar über dem Atmosphärendruck, so daß sich die Zitze unter der Einwirkung des Melkvakuums voll an den sie stützenden Zitzengummi anlegt.

Mit zunehmender Euterentleerung nimmt der Euterinnendruck allmählich ab und der Fürstenberg'sche Venenring verengt sich langsam. Ab einem bestimmten Zeitpunkt kann durch diese Ringfalte weniger Milch in die Zitzenzisterne nachfließen, als durch den Strichkanal abgesogen wird. Dadurch erstirbt nicht nur der Milchfluß, sondern gleichzeitig setzt sich nun das Melkvakuum in die Zitzenzisterne fort. Dadurch erschlafft die vorher pralle Zitze und die Zitzenzisterne wird nunmehr bei jedem Entlastungsakt zusammengedrückt, wodurch die inneren Schleimhäute der Zisternenauskleidung gegeneinander gerieben werden. Dies verursacht der Kuh einen Schmerz, was zu einem weiteren Sperren der Kuh gegen eine Milchabgabe führt. Wird der maschinelle Melkvorgang über diesen Zeitpunkt hinaus fortgesetzt, so kann dies zu mechanischen Euerbeschädigungen führen. Zu dem Zeitpunkt, zu dem das Melkvakuum in die Zitzenzisterne eindringt und der Milchfluß versiegt, fließt jedoch noch Milch in die Drüsenzisterne aus dem Euter nach, die nicht mehr selbsttätig maschinell abgemolken wird. Es ist deshalb nach dem maschinellen Melken noch ein zeitraubendes Nachmelken erforderlich. Dieses Nachmelken macht einen erheblichen Teil der Routinezeit eines Melkers aus, die er pro Kuh aufwenden muß.

Um ein möglichst schonendes maschinelles Melken zu erreichen und um ein automatisches Ausmelken zu ermöglichen, ist durch die deutsche Patentschrift 2 539 868 bereits ein Verfahren bekannt geworden, bei dem zu Beginn des Melkvorganges zunächst während etwa 2 Min. unabhängig vom Milchfluß ein hoher Melkunterdruck angewandt wird und bei dem nach Ablauf dieser Zeit der Melkunterdruck derart gesteuert wird, daß bei Unterschreiten eines Milchflusses von etwa 0,5 l/min der Melkunterdruck auf einen niedrigeren Nachmelkunterdruck umgeschaltet wird. Ein ähnliches Melkverfahren ist bereits aus der DE-OS 27 13 269 bekanntgeworden, bei dem von einer Hauptmelkphase auf eine Nachmelkphase umgeschaltet wird, wenn der Milchfluß unter einen Wert von 0,2 kg/min absinkt. In diesem Falle wird zur Schonung der Zitze ein niedrigeres Vakuum an die Zitze angelegt und eine weniger starke Pulsation auf die Zitze ausgeübt. Ein ähnliches Verfahren ist ebenfalls bereits durch die DE-PS 1 956 196 bekanntgeworden, bei dem gleichzeitig mit der Umschaltung von einem Melkunterdruck auf einen geringeren Nachmelkunterdruck bei Unterschreiten eines vorbestimmten Milchflußwertes derselbe verringerte Nachmelkunterdruck auch in den Zwischenraum zwischen dem Saugeinsatz und dem Melkbechergehäuse als Pulsationsunterdruck gegeben wird. Ebenso wurde in dieser Literaturstelle auch bereits ein Verfahren beschrieben, bei dem in Abhängigkeit von dem Unterschreiten eines vorbestimmten Milchflußwertes das Verhältnis zwischen den Längen der Druck- und Saugperiode bei dem Pulsationsunterdruck derart umgestellt wird, daß bei starkem Milchstrom die Saugperiode lang und bei schwachem oder ausbleibendem Milchstrom die Saugperiode kurz wird. Ebenso wurde aus dieser Literaturstelle auch ein Verfahren bekannt, bei dem während der Nachmelkphase die Pulsationsfrequenz gegenüber der Melkphase wesentlich herabgesetzt wird. Aus der DE-OS 2 524 398 ist auch bereits ein Verfahren bekanntgeworden, bei dem zur schonenden Behandlung der Zitze während der Nachmelkphase zwar der Druck im Inneren des Saugeinsatzes auf dem normalen Unterdruck gehalten wird, bei dem jedoch der bei der Pulsation angelegte Unterdruck verringert wird, so daß sich die Wände des Saugeinsatzes an die Zitze anlegen, wodurch nur die Spitze der Zitze und nicht die gesamte Zitze dem Unterdruck im Inneren des Saugeinsatzes ausgesetzt werden soll.

Aus der DE-OS 2 414 107 ist weiterhin bereits ein Verfahren bekannt gewesen, bei dem eine Verletzung der Zitze während der Nachmelkphase vermieden und ein selbsttätiges Ausmelken dadurch erreicht werden soll, daß beim Unterschreiten eines vorgegebenen Milchflusses die Pulsfrequenz des Pulsators erniedrigt wird, ohne daß das Vakuum im Inneren des Saugeinsatzes, d. h. in der Milchabführleitung gegenüber dem Melkunterdruck verändert wird.

Durch die australische Patentschrift 109 446 ist auch bereits eine Vorrichtung bekannt geworden, bei der der Melkunterdruck proportional zu dem jeweils herrschenden Milchfluß gesteuert werden kann. Das heißt, wenn zu Beginn des Melkvorganges kein oder nur ein geringer Milchfluß herrscht, wird ein geringer Melkunterdruck angelegt, der in dem Maße vergrößert wird in dem der Milchfluß zunimmt. Am Ende des Melkvorganges wird dann der Melkunterdruck im gleichen Maß wieder verringert, in dem der Milchfluß abnimmt. Ein derartiges Melkverfahren eignet sich jedoch nicht für schwer melkbare Kühe, da hier gerade von vorneherein ein hoher Melkunterdruck benötigt wird, um überhaupt einen annehmbaren Milchfluß zu erreichen. Außerdem kann das Melkverfahren gerade bei schwer melkbaren Kühen zu unphysiologisch langen Melkzeiten führen, so daß bei der zu melkenden Kuh bereits aufgrund der langen Melkzeit die Bereitschaft sinkt, noch weitere Milch abzugeben, obwohl eine wesentliche Menge Milch noch nicht abgemolken ist.

Es wurde auch bereits versucht, einen konstanten, jedoch wesentlich geringeren Melkunterdruck als sonst üblich anzuwenden. Dies führt jedoch zwangsläufig zu unphysiologisch langen Melkzeiten, wodurch die insgesamt abgegebene Milchmenge verringert wird.

Aus der DE-OS 2 646 596 ist auch bereits eine Vorrichtung zum automatischen Nachmelken nach Unterschreiten eines vorbestimmten Milchflusses bekannt geworden, bei dem mit Hilfe eines unter die Kuh verschwenkbaren Gestänges und eines Seilzuges, der am Melkzeug angreift, bei Beginn der Nachmelkphase ein senkrechter oder schräger Zug auf das Melkzeug nach unten ausgeübt wird.

Eine ähnliche pneumatisch betriebene Anordnung, bei der das gesamte Melkzeug an einem waagrecht verschiebbaren und einem senkrecht verschiebbaren Arm gehaltert ist, ist bereits aus der DE-AS 1 278 166 bekannt geworden. Diese Anordnung wird bei einer Verringerung des Milchflusses unter einen Wert von 0,4 kg/min derart pneumatisch gesteuert, daß über die Melkbecher auf die Zitzen eine nach unten gerichtete Kraft ausgeübt wird, wodurch eine Intensivierung der Milchabgabe erreicht werden soll. Dieser nach unten gerichtete Zug auf die Melkbecher wird während der gesamten sogenannten Nachmelkphase aufrechterhalten, bis der Milchfluß einen Wert von 0,2 kg/min unterschreitet, worauf das gesamte Melkzeug automatisch abgezogen wird.

Während sich mit den zuletzt genannten Vorrichtungen, mit denen in der Nachmelkphase ein nach unten gerichteter Zug auf das Melkzeug ausgeübt wird, gegebenenfalls ein weitgehend selbsttätiges Ausmelken erreichen läßt, ist ein solches selbsttätiges Ausmelken durch Änderung der Melkparameter nicht gezielt durchführbar. Solche Vorrichtungen jedoch, mit denen während der Nachmelkphase ein senkrechter Zug auf das Melkzeug ausgeübt werden kann, haben den wesentlichen Nachteil, daß sie die Bewegungsfreiheit des Melkzeuges an der Kuh während des Melkens stark einschränken und damit gleichzeitig die Milchabgabebereitschaft der Kuh stören. Außerdem können derartige Einrichtungen nur in Melkständen eingesetzt werden. Andererseits ist eine derartige Einrichtung technisch sehr aufwendig und zumeist im rauhen Praxisbetrieb sehr anfällig. Außerdem besteht für die Kühe eine erhebliche Verletzungsgefahr durch derartige Vorrichtungen.

Gemäß der vorliegenden Erfindung wurde nun festgestellt, daß die Möglichkeit des selbsttätigen Nachmelkens entscheidend davon abhängt, in welcher Stellung sich das Zitzengummi des Melkbechers während der Nachmelkphase befindet.

Wie bereits oben aufgeführt wurde, liegt bei einer melkbereiten Kuh der Zitzeninnendruck etwa 30—60 mbar über dem Atmosphärendruck, so daß sich die Zitze unter der Einwirkung des Melkunterdrucks voll an das sie stützende Zitzengummi anlegt. Dadurch herrscht zwischen der Zitze und dem Zitzengummi eine starke Reibung, wodurch bei gegebenem Gleichgewicht zwischen Melkzeuggewicht und Melkunterdruck ein Hochklettern des Melkbechers aufgrund der Saugwirkung des Melkunterdrucks verhindert wird. Sobald ab einem bestimmten Zeitpunkt jedoch aufgrund einer allmählichen Verengung des Fürstenbergschen Venenringes weniger Milch in die Zitzenzisterne nachfließt, als durch den Strichkanal aufgrund des Melkunterdrucks abgesogen wird, setzt sich der Melkunterdruck in die Zitzenzisterne fort. Dadurch steigt der Unterdruck in der Zitzenzisterne so lange, bis die Druckdifferenz zwischen dem Unterdruck in der Zitzenzisterne und dem Melkunterdruck soweit abgenommen hat, daß aufgrund dieser geringen Druckdifferenz der Strichkanal nicht mehr geöffnet wird. Die Druckdifferenz, bei der der Strichkanal öffnet, schwankt zwischen 0,15 und 0,5 bar. Im Mittelwert liegt die Druckdifferenz zwischen 0,20 und 0,25 bar, wobei Kühe, die eine Druckdifferenz von 0,25 bar benötigen, bevor eine Milchabgabe erfolgt, bereits als schwer melkbare Kühe bezeichnet werden. Sobald der Unterdruck sich in die Zitzenzisterne fortsetzt, erschlafft die vorher pralle Zitze innerhalb von etwa 3—10 Pulsationszyklen. Hierdurch nimmt die Reibung zwischen dem Zitzengummi und der Zitze ab und der Melkbecher wandert an der Zitze infolge der Saugwirkung des Melkunterdrucks in Richtung der Zitzenbasis hoch, bis ein neues Kräftegleichgewicht erreicht wird. Die Gefahr des Hochkletterns des Melkbechers an der Zitze ist somit bei leicht melkbaren Kühen größer als bei schwer melkbaren Kühen. Dieses Hochklettern des Melkbechers an der Zitze bewirkt, daß die obere Dichtlippe des Zitzengummis einen zusätzlichen Druck auf den Fürstenbergschen Venenring am unteren Ende der Drüsenzisterne ausübt und die Ringfalte von außen her vollends einschnürt. Dadurch wird bewirkt, daß vorzeitig die Tonuslockerung der glatten Eutermuskulatur der Kuh aufhört, da die Kuh in diesem Drüsenbereich besonders empfindliche Druck- und Berührungsrezeptoren aufweist, die äußerst empfindlich auf den Druck der Dichtlippe des Zitzengummis reagieren. Dies führt dazu, daß die Kuh sich unwohl fühlt und selbst den Muskel verschließt, wodurch der Milchfluß blockiert wird. Diese den Milchfluß blockierende Wirkung der Dichtlippe wird noch dadurch unterstützt, daß sich beim Hochrutschen des Melkbechers auf der Zitze der Melkunterdruck in den Kopf des Melkbechers fortsetzt, wodurch das äußerst empfindliche Zitzengewebe an der Zitzenbasis unterhalb der einschnürenden Ringdichtlippe des Zitzengummis dem vollen Melkunterdruck ausgesetzt wird, ohne daß das Zitzengewebe in diesem Bereich durch den Zitzengummi gestützt würde. Dieser Vorgang bereitet der Kuh einen zusätzlichen Schmerz, was zu einem weiteren Sperren der Kuh gegen eine Milchabgabe führt. Damit kann die noch weiter aus der Milchdrüse in die Drüsenzisterne nachfließende Milch nicht mehr gewonnen werden. Die Menge dieser losen Restmilch beträgt im Mittel knapp 500 g pro Melkung mit einer Variationsbreite von 0—2000 g. Diese hohe Restmilchmenge verbietet heute das Unterlassen des Nachmelkens aus Gründen der Gesamtproduktion und der Eutergesundheit. Um diese Nachmilch entziehen zu können, muß der Verschluß der Ringfalte rückgängig gemacht werden. Dies kann etwa dadurch erreicht werden, daß auf die Melkbecher bzw. auf das Melkzeug eine so hohe Kraft aufgebracht wird, daß die Melkbecher an der Zitze abgesenkt werden. Dieser Vorgang muß jedoch unverzüglich nach dem Abbruch des Milchflusses in der Zitze erfolgen, um ein euterschädliches Blindmelken zu vermeiden.

Wie im einzelnen noch weiter unten erläutert werden soll, wurde festgestellt, daß bei den bisher bekannten Melkverfahren mit Änderungen der Melkparameter in der Nachmelkphase die Melkbecher zum größten Teil bereits auf der Zitze hochgeklettert sind, bevor die eigentliche Nachmelkphase beginnt. Wie sich herausgestellt hat, ist aber ein Ausmelken der Nachgemelksmilch auch dann durch eine Änderung der Melkparameter nicht mehr erreichbar, wenn der Melkbecher bereits auf der Zitze hochgeklettert ist. Es bedarf dann eines manuellen oder maschinellen Eingreifens, um die Melkbecher auf der Zitze wieder abwärts zu führen und in einer abgesenkten Stellung zu halten, um auch die Nachgemelksmilch entziehen zu können. Eine manuelle Absenkung der Melkbecher durch den Melker ist aber äußerst arbeitsaufwendig. Eine mechanische Vorrichtung zum Absenken des Melkzeuges ist äußerst umständlich und bringt eine erhebliche Verletzungsgefahr für die Kühe mit sich.

Der vorliegenden Erfindung liegt deshalb die Aufgabe zugrunde, ein Verfahren zum selbsttätigen Ausmelken beim maschinellen Milchentzug anzugeben, bei dem eine vorzeitige Blockierung der Passage zwischen der Drüsenzisterne und der Zitzenzisterne vor der vollständigen Euterentleerung verhindert wird.

Diese Aufgabe wird ausgehend von einem Verfahren der eingangs genannten Art erfindungsgemäß dadurch gelöst, daß die fortlaufende Messung die Änderung des Milchflusses pro Zeiteinheit erfaßt, und die Herabsetzung der Melkintensität unmittelbar nach einer während einer Zeitdauer von 5 bis 10 Sekunden festgestellten Abnahme des Milchflusses von mehr als 1 kg/min$^2$ erfolgt.

Diese abrupt einsetzende verstärkte Verringerung des Milchflusses am Ende der Hauptmelkphase bildet bei jeder Kuh ein untrügliches Zeichen für den Beginn des Endes der Hauptmelkphase. Zu diesem Zeitpunkt ist die Zitze noch prall, die Passage zwischen Drüsenzisterne und Zitzenzisterne noch nicht blockiert, und der Melkbecher noch nicht auf der Zitze hochgeklettert. Durch unmittelbare Herabsetzung der Melkintensität zu diesem Zeitpunkt läßt sich eine Blockierung der Passage zwischen Drüsenzisterne und Zitzenzisterne und das dadurch sekundär bewirkte Hochklettern des Melkbechers verhindern. Durch diese Maßnahme kann ein ungehinderter weiterer Milchfluß bis zu zum vollständigen Ausmelken aufrechterhalten werden.

Eine zweite Lösung der gestellten Aufgabe besteht erfindungsgemäß in einem Verfahren zum selbsttätigen Ausmelken beim maschinellen Milchentzug, bei dem die in ein elastisches Zitzengummi des Melkbechers eingeführte Zitze einem vorbestimmten Unterdruck ausgesetzt wird und an einen Zwischenraum zwischen einem Melkbechergehäuse und dem die Zitze umschließenden Zitzengummi ein pulsierender Unterdruck angelegt wird, fortlaufend die Messung eines Melkparameters vorgenommen und die Melkintensität in Abhängigkeit von dem Meßergebnis herabgesetzt wird, das sich dadurch auszeichnet, daß die fortlaufende Messung den Druck im Kopfinnenraum des Zitzengummis unterhalb der gegen die Zitze anliegenden Dichtlippe erfaßt und daß die Herabsetzung der Melkintensität beim Beginn eines Absinkens dieses Druckes erfolgt.

Hierdurch wird eine weitere Möglichkeit der automatischen Steuerung des Melkvorganges an die Hand gegeben. Diese Möglichkeit der Steuerung ist jedoch nicht genauso exakt wie die erstgenannte Steuerungsmöglichkeit, da eine Absenkung des Druckes im Kopfinnenraum des Zitzengummis zumeist erst dann auftritt, wenn die Zitze bereits weitgehend erschlafft ist und ein Hochklettern des Zitzengummis an der Zitze unmittelbar bevorsteht.

Durch beide erfindungsgemäße Lösungen wird erreicht, daß eine Sperrung der Passage zwischen der Drüsenzisterne und der Zitzenzisterne und somit ein Hochklettern des Melkbechers an der Zitze verhindert wird. Hierdurch wird eine wesentlich bessere selbsttätige maschinelle Euterentleerung, d. h. mit wesentlich geringerer Nachgemelksmenge, erreicht. Dadurch können sich die Nachmelkmanipulationen des Melkers allein auf den sogenannten Kontrollgriff beschränken. Ein Nachmelken von Hand ist in jedem Falle nicht mehr erforderlich. Besonders vorteilhaft ist die Anwendung des erfindungsgemäßen Verfahrens bei Melkanlagen mit automatischer Melkzeugabnahme, die mit einer zeitlichen Verzögerung erfolgt, wenn der Milchstrom versiegt ist. Bei der Anwendung derartiger automatischer Melkzeugabnahmevorrichtungen blieb bis jetzt systembedingt die lose Restmilch im Euter zurück, mit der Folge von vermehrten Mastitisproblemen und schlechteren Milchleistungen der Kühe.

Vorzugsweise Ausgestaltungen der Erfindung gehen aus den Unteransprüchen in Verbindung mit der weiteren Beschreibung hervor.

Im folgenden soll die Erfindung näher anhand von in der Zeichnung dargestellten Diagrammen erläutert werden. In der Zeichnung zeigt

Fig. 1 eine schematische Darstellung des üblichen Milchflusses während eines Melkvorganges mit Darstellungen a—d der Beeinträchtigung der Zitze in den verschiedenen Phasen des maschinellen Milchentzuges,

Fig. 2—5 Darstellungen des Milchflusses in Abhängigkeit von der Zeit, wie er an verschiedenen Kühen gemessen wurde, die sich in verschiedenen Laktationsmonaten befanden.

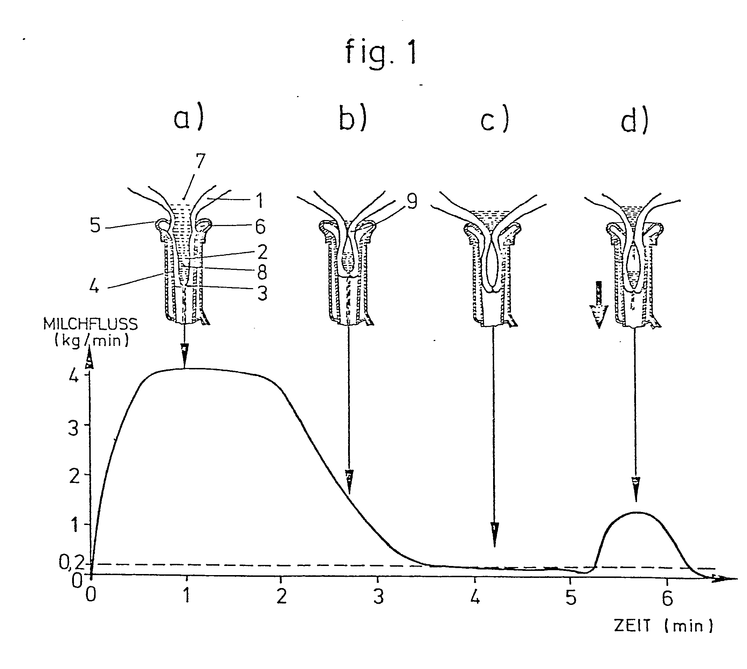

In der Fig. 1 ist in einem Diagramm der Milchfluß in kg/min in Abhängigkeit von der Zeit in Minuten dargestellt, wie er in vielen Fällen auftritt. Zu Beginn des Melkvorganges steigt der Milchfluß während etwa der ersten halben Minute auf einen maximalen Wert an. Auf diesem maximalen Wert bleibt der Milchfluß bis etwa nach 2 Minuten eine Abnahme des Milchflusses eintritt. Der Milchfluß sinkt soweit, daß er nach etwa 3¹/₂ Minuten eine untere Grenze von 0,2 kg/min unterschreitet. Solange der Milchfluß bei angelegtem Melkvakuum unter 0,2 kg/min bleibt, spricht man von einem Blindmelken. Durch einen ausreichenden Zug an dem Melkbecher oder durch manuelles Nachmelken kann sodann schließlich noch das Nachgemelk abgemolken werden, was durch den Anstieg der Kurve in der Zeit zwischen 5 und 7 Minuten angedeutet ist.

Die Darstellungen a—d über dem Diagramm zeigen die jeweiligen Zustände der Zitze in einem üblichen Melkbecher, während 4 verschiedener Hauptphasen des Melkvorganges. Die Darstellung a zeigt das untere Ende des Euters 1 und die sich daran anschließende Zitze 2, an deren unteren Ende an dem Strichkanal 3 die Milch austritt. Die Darstellung zeigt die Zitze während des vollen Milchflusses. Zu dieser Zeit ist die Drüsenzisterne 7 des Euters unmittelbar mit der Zitzenzisterne 8 verbunden, die beide mit Milch gefüllt sind. Die pralle Zitze 2 liegt gegen den Saugstutzen 4 eines Zitzengummis an. Die obere Dichtlippe 5 des Zitzengummis befindet sich in einem Abstand von dem unteren Ende des Euters. In dem Kopfinnenraum 6 des Zitzengummis herrscht ein Atmosphärendruck oder höchstens ein leichter Unterdruck.

In der Darstellung b ist der Zustand bei abnehmendem Milchfluß dargestellt. In diesem Zustand verengt sich der Fürstenbergsche Venenring 9 derart, daß die aus der Drüsenzisterne in die Zitzenzisterne nachfließende Milchmenge geringer ist, als die Milchmenge, die aus der Zitzenzisterne durch den Strichkanal abgesaugt wird. Hierdurch erschlafft die Zitze. Dadurch ist die Dichtung zwischen dem Schaft des Zitzengummis und der Zitze nicht mehr vollständig, so daß sich der Unterdruck unterhalb der Zitze zunehmend in den Kopfinnenraum 6 des Zitzengummis unterhalb der Dichtlippe fortsetzen kann. In diesem Zustand geht die eigentliche Dichtfunktion von dem Zitzengummischaft auf die obere Dichtlippe des Zitzengummis über. Der Kopfinnenraum 6 wird durch den Raum gebildet, der durch das sich stärker erweiternde obere Ende des Schaftes, die Ringlippe und den nicht durch den Schaft abgestützten Teil der Zitze begrenzt wird. Gleichzeitig mit der Erschlaffung der Zitze verringert sich zunehmend die Reibung zwischen Zitzengummi und Zitze bis zu dem Punkt, an dem die verbleibende Reibung ein Hochklettern des Zitzengummis nicht mehr verhindern kann. In diesem Zeitpunkt findet ein Hochklettern des Zitzengummis an der Zitze innerhalb weniger Pulsationszyklen statt.

Die Darstellung c zeigt den Zustand, in dem der Milchfluß unter 0,2 kg/min abgenommen hat und die Zitze völlig erschlafft ist. Der Melkbecher ist an der Zitze vollständig hochgeklettert, so daß seine Dichtlippe 5 gegen das untere Ende des Euters und dabei insbesondere auf den Fürstenbergschen Venenring drückt. Obwohl in der Drüsenzisterne noch Milch vorhanden ist, wird diese trotz des verhältnismäßig hohen Melkvakuums nicht abgesaugt.

Die Darstellung d zeigt, daß die in der Drüsenzisterne noch vorhandene Milch nachträglich noch dadurch abgemolken werden kann, daß auf den Melkbecher ein solcher Abwärtszug ausgeübt wird, daß das Hochklettern des Melkbechers an der Zitze wieder rückgängig gemacht wird.

Dieser Vorgang stellt das bisher übliche Nachmelken dar. Hierzu war es bisher notwendig, daß entweder der Melker von Hand einen entsprechenden Zug auf das Melkzeug während der gesamten Nachmelkphase ausgeübt hat, oder daß eine entsprechende Vorrichtung vorgesehen war, mit deren Hilfe ein derartiger Zug in der Nachmelkphase auf das Melkzeug ausgeübt werden konnte.

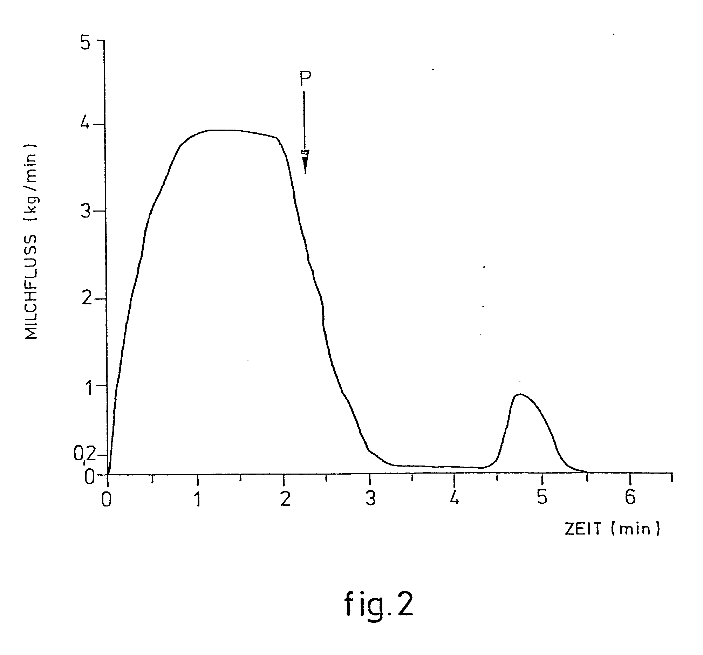

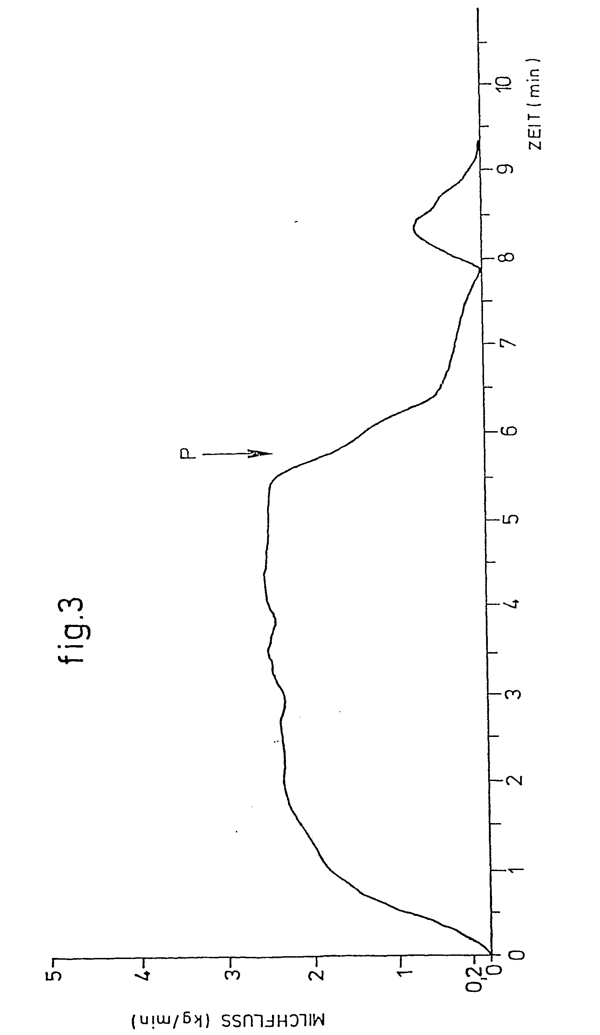

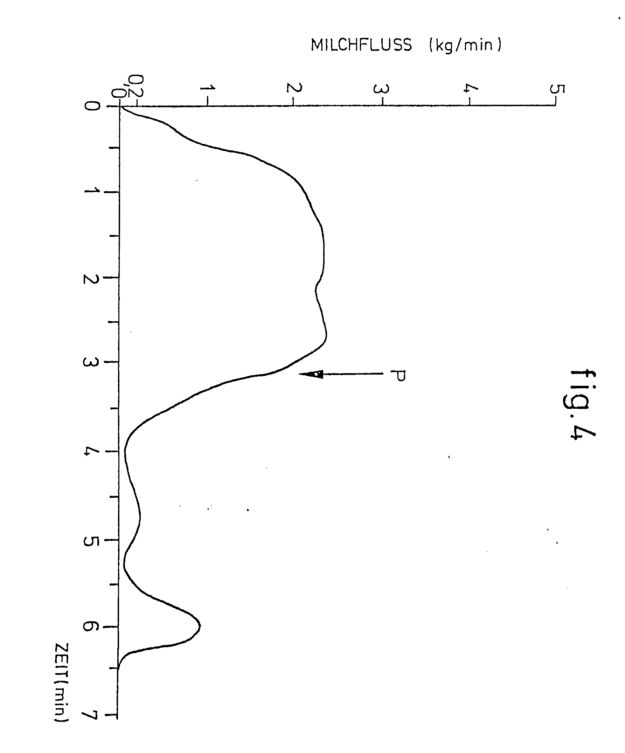

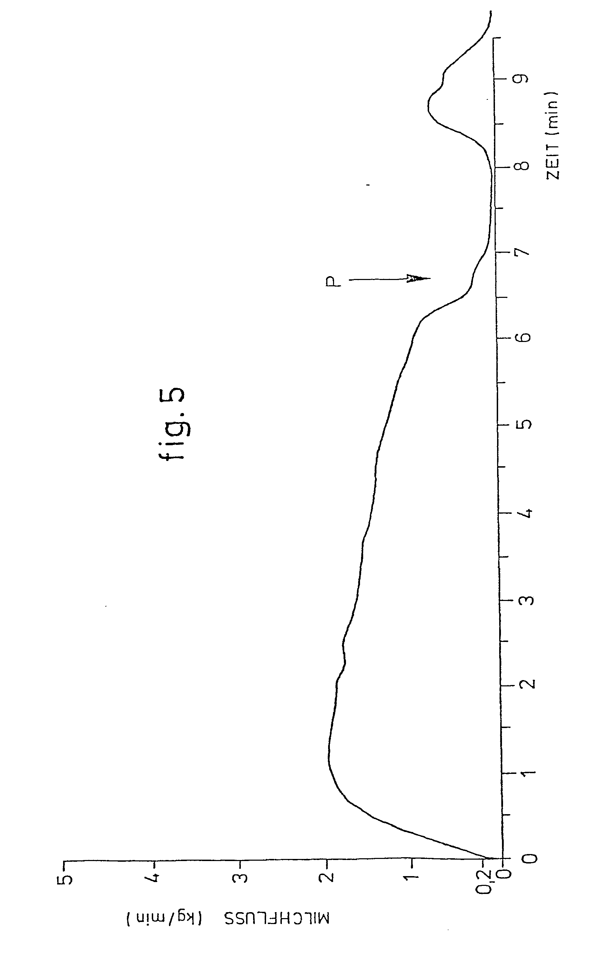

Wie oben erörtert wurde, wurde festgestellt, daß der Hauptgrund dafür, daß sich die Kuh am Ende des Melkvorganges gegen eine weitere Milchabgabe sperrt, darin zu sehen ist, daß während des Melkvorganges der Melkbecher an der Zitze hochwandert. In den Fig. 2—5 sind Versuche dargestellt, mit denen der Beginn des Hochkletterns des Melkbechers an einer Zitze festgestellt wurde. Der Beginn eines solchen Hochkletterns ist in den Fig. 2—5 jeweils durch einen Pfeil und die Markierung P eingezeichnet. Wie die Figuren zeigen, findet ein solches Hochklettern zu den unterschiedlichsten Zeiten ab Beginn des Melkvorganges statt. So beginnt gemäß der Fig. 2 ein Hochklettern bereits nach 2,3 Minuten, bei der Kurve nach Fig. 4 erst etwa nach 3,2 Minuten, während bei den Kurven nach den Figuren 3 und 5 ein Hochklettern erst bei oder nach etwa 5,9 bzw. 6,7 Minuten beginnt. Weiterhin ist aus den Kurven zu ersehen, daß der Beginn des Kletterns offensichtlich auch unabhängig von der Höhe des Milchflusses ist. So beginnt gemäß der Fig. 2 das Hochklettern bereits bei einem Milchfluß von etwa 2,5 kg/min, während bei der Kurve nach der Fig. 5 ein Hochklettern erst bei einem Milchfluß knapp über 0,2 kg/min einsetzt. Aufgrund dieser unterschiedlichen Werte bei den verschiedenen Kühen sind mithin eine Steuerung in Abhängigkeit von der Zeit oder von dem Milchfluß ungeeignet, wobei davon ausgegangen wird, daß zur Erreichung des anfänglichen Hauptmilchflusses optimale Melkparameter, insbesondere ein ausreichend hohes Melkvakuum, angewandt werden, um nicht die Melkzeit zu physiologisch ungünstig langen Melkzeiten hin zu verschieben.

Es wurde nun gefunden, daß auch dann, wenn zu Beginn des Melkvorganges ein verhältnismäßig hohes Melkvakuum angelegt wird, um einen möglichst raschen Milchentzug zu gewährleisten, ein Hochrutschen des Melkbechers dann verhindert werden kann, wenn die Änderung des Milchflusses kontinuierlich gemessen wird, und wenn eine Herabsetzung der Melkintensität durch entsprechende Änderung der Melkparameter dann vorgenommen wird, wenn während einer Zeit zwischen etwa 5 und 10 Sek. eine Abnahme des Milchflusses von mehr als 1 kg/min² festgestellt wird. Wie aus den Kurven der Fig. 2—5 zu entnehmen ist, in denen der Gesamtmilchfluß aus allen 4 Zitzen dargestellt ist, ergibt sich nach einer Zeit des vollen Milchflusses ein verhältnismäßig scharfer Knick des Milchflusses beim Übergang zum Bereich verminderten Milchflusses hin. Dieser Knick ist noch wesentlich ausgeprägter, wenn lediglich der Milchfluß an einer einzelnen Zitze beobachtet wird. Ein solcher Knick oder eine verhältnismäßig starke Abnahme des Milchflusses tritt in der Fig. 2 etwa bei 2 Min., in der Fig. 3 bei etwa 5,5 Min., in der Fig. 4 bei etwa 7,8 Min. und in der Fig. 5 bei etwa 6,2 Min. auf. Hierbei ist zu beachten, daß der Milchfluß auch bereits während des vollen Milchflusses schwanken oder sogar, wie es Fig. 5 zeigt, während der Zeit des vollen Milchflusses ingesamt abnehmen kann. So nimmt der Milchfluß bei dem in Fig. 5 gezeigten Beispiel während des vollen Milchflusses etwa von 2,0 auf 0,8 kg/min ab. Auch bei diesem in Fig. 5 gezeigten Beispiel, bei dem es sich um eine schwer melkbare Kuh handelt, kann mithin, wenn eine Änderung der Melkparameter, etwa eine Herabsetzung des Melkunterdrucks, in Abhängigkeit von der Änderung des Milchflusses durchgeführt wird, während einer äußerst langen Zeit von 6 Min., d. h. während der Zeit der vollen Milchabgabe, ein möglichst hohes Vakuum angelegt werden, was insbesondere bei schwer melkbaren Kühen unbedingt notwendig ist, sofern überhaupt eine Milchabgabe stattfinden soll und die Melkzeit nicht zu unphysiologisch langen Melkzeiten verlängert werden soll. Ein Hochklettern des Melkbechers tritt auch in diesem Falle erst am Ende der Hauptmelkphase nach dem Auftreten einer abrupten Milchflußänderung, bei etwa 6,2 Min. auf.

Eine Herabsetzung der Melkintensität durch Änderung der Melkparameter muß innerhalb einer verhältnismäßig kurzen Zeit, d. h. in jedem Falle in einer kürzeren Zeit als 20—30 Sek. nach dem Beginn der über einem Wert von 1 kg/min² liegenden Milchfluß-Änderungen vorgenommen werden, da ansonsten in dieser Zeit der Melkbecher bereits an der Zitze hochgewandert ist, ohne daß dieser Vorgang sodann ohne manuelles Eingreifen rückgängig gemacht werden könnte. Aus diesem Grunde sind auch die bisher bekannten Vorrichtungen, bei denen die Höhe des Melkunterdrucks in Abhängigkeit von und proportional zu dem Milchfluß gesteuert werden, nicht geeignet, ein Hochklettern des Melkbechers zu verhindern, da die Steuerung bei diesen bekannten Vorrichtungen wesentlich zu träge ist. Um eine möglichst exakte Steuerung zu gewährleisten, wird vorzugsweise die Milchflußänderung an jeder Zitze einzeln überwacht und entweder eine gleichzeitige Änderung der Melkintensität an allen 4 Zitzen in Abhängigkeit von dem ersten Auftreten einer starken Abnahme des Milchflusses gesteuert, oder es wird die Melkintensität an allen 4 Zitzen einzeln gesteuert. Wird eine Steuerung aufgrund des Gesamtmilchflusses in allen 4 Zitzen vorgenommen, so sollte nach Möglichkeit beachtet werden, daß die Vorderviertel eines Euters normalerweise lediglich etwa 45% der Gesamtmilch und die Hinterviertel etwa 55% der Gesamtmilch erzeugen. Der hierdurch bewirkte Unterschied in der Melkzeit wird nur zum Teil dadurch ausgeglichen, daß die Vorderviertel etwas langsamer melken als die Hinterviertel. Um aber zu erreichen, daß möglichst das Ende des Hauptmilchflusses sowohl in den Vordervierteln wie in den Hintervierteln gleichzeitig auftritt, können die Melkparameter für diese Viertel bereits vom Beginn des Melkvorganges an so aufeinander abgestimmt werden, daß dies der Fall ist. Dies kann etwa dadurch erreicht werden, daß die Saugphasenlängen in den Vorder- und Hintervierteln verschieden gewählt werden. Die Änderung der Melkintensität nach der Normalmelkphase, also der Phase vollen Milchflusses, kann auf verschiedene Weise, wie weiter unten näher erläutert, erfolgen. In jedem Falle sollte die Melkintensität nach Feststellung der oben beschriebenen Änderung des Milchflusses wenigstens einmal, ggf. auch mehrmals, derart herabgesetzt werden, daß höchstens soviel Milch durch den Strichkanal aus der Zitzenzisterne entzogen wird, wie durch die Ringfalte aus der Drüsenzisterne noch nachfließen kann. Auf diese Weise wird verhindert, daß der Melkunterdruck in die Zitzenzisterne übergeht, wodurch die Zitze erschlafft und ggf. der Melkbecher an der Zitze hochklettert. Eine mehrmalige Verringerung der Melkintensität kann dann angezeigt sein, wenn etwa eine Zeit nach einer ersten Herabsetzung der Melkintensität abermals der Zustand eintritt, daß der Melkbecher zu klettern droht. Sofern eine mehrmalige Verringerung der Melkintensität durchgeführt wird, erfolgt die Umsteuerung von einer höheren Melkintensität zu einer niedrigeren Melkintensität jeweils ebenfalls in Abhängigkeit von der Änderung des Milchflusses, d. h. sobald eine Änderung von mehr als 1 kg/min$^2$ festgestellt wird.

Eine erste Möglichkeit, die Melkintensität herabzusetzen, besteht darin, den Melkunterdruck zu verrringern. Hierbei muß jedoch beachtet werden, daß eine solche Herabsetzung des Melkunterdrucks bei ansonsten gleichen Melkparametern zu träge reagieren kann, wenn nicht ein Steuerventil direkt in der milchführenden Leitung nahe dem Melkzeug vorgesehen wird. Eine Änderung des Melkunterdrucks kann etwa dadurch erreicht werden, wie es bereits bekannt ist, daß zwei getrennte Vakuumleitungen mit verschiedenem Unterdruck vorgesehen werden.

Eine weitere Möglichkeit der Herabsetzung der Melkintensität besteht darin, daß das Phasenverhältnis von Saug- und Entlastungsphase derart verändert wird, daß die Saugphase gegenüber der Entlastungsphase herabgesetzt wird. Für eine solche Steuerung sind ebenfalls bereits Beispiele bekannt.

Eine besonders zweckmäßige und einfach zu erreichende Herabsetzung der Melkintensität wird erzielt, indem der Pulsator-Unterdruck herabgesetzt wird. Hierdurch wird erreicht, daß das Zitzengummi in der Saugphase den Strichkanal nicht mehr voll öffnet, so daß weniger Milch aus der Zitze während einer Saugphase abfließen kann.

Eine weitere Möglichkeit der Herabsetzung der Melkintensität besteht in einer Erhöhung der Pulsierungsfrequenz. Eine solche Frequenzänderung ist verhältnismäßig technisch einfach durchzuführen. Hierdurch wird in den heute gebräuchlichen Pulsatoren eine Verkürzung der relativen Saugphase bewirkt, denn der Zitzengummi öffnet sich bei Frequenzen nicht mehr voll in der Saugphase, sondern vibriert in einem mehr oder weniger zusammengefallenen Zustand, was etwa bei Frequenzen von 100 Pulsationen/min der Fall ist.

Die tatsächliche Herabsetzung der Melkintensität hängt in diesem Fall jedoch vom Pulsatortyp, dem Volumen der Pulsationsräume wie auch von der Rückstellkraft des Zitzengummis ab. Insgesamt wird bei einem solchen Vorgehen eine gute Zitzenmassage und ein langsames Abmelken erreicht. Ferner tritt keine Blindmelkschädigung auf. Ferner wurde festgestellt, daß bei einer derartigen Verfahrensführung eine optimale Stimulation der Kuh stattfindet, so daß dieses Verfahren auch zu Beginn des Melkprozesses in der Stimulationsphase angewandt werden könnte. Geräte zur Erhöhung der Pulsationsfrequenz sind ebenfalls bereits bekannt. Bei der Anwendung dieser Möglichkeit sollte ggf. eine zusätzliche Geräuschdämpfung vorgesehen sein.

Geräte zur Messung des Milchflusses sind ebenfalls in der Technik hinlänglich bekannt. Die Messung der Änderung des Milchflusses kann etwa durch elektronische Messung erfolgen, wobei beispielsweise über den Milchfluß der jeweils letzten 2—10 Pulsationszyklen gemittelt werden kann, um kleinere, kurzzeitige Schwankungen auszuschließen. Dies kann etwa durch eine fortlaufende Speicherung der gemessenen Werte in einem Speicher und Berechnung des Mittelwertes erfolgen, oder es kann auch eine Methode angewandt werden, bei der das Meßsignal jeweils über ein Tiefpaßfilter geführt wird.

Da mit dem erfindungsgemäßen Verfahren ein kontinuierliches Ausmelken ohne Verbleiben eines Nachgemelks erreicht wird, eignet sich das erfindungsgemäße Verfahren insbesondere zur Anwendung bei Vorrichtungen mit einer automatischen Abnahme des Melkzeugs. Eine solche Abnahme des Melkzeugs kann hierbei in einfacher Weise etwa dadurch gesteuert werden, daß ein zusätzliches Signal erzeugt wird, wenn ein geringerer Milchfluß als 0,2 kg/min festgestellt wird. In diesem Falle ist der Melkprozeß besonders zitzenschonend, da eine automatische Abschaltung vor dem Einsetzen des Blindmelkens erfolgt.

Lediglich bei besonders schwer melkbaren Kühen kann der Fall eintreten, daß der Milchfluß ständig abnimmt, ohne daß eine markante Abnahme des Milchflusses auftritt, durch die eine Herabsetzung der Melkintensität erfolgt. Um in diesen Fällen ein schädliches Blindmelken zu vermeiden, sollte vorteilhafterweise eine Vorrichtung vorgesehen werden, mit der bei der Unterschreitung eines vorbestimmten Milchflusses von beispielsweise 0,4 oder 0,2 kg/min ein Signal abgegeben wird, das den Melker darauf hinweist, daß bei dieser Kuh keine vollständige Ausmelkung stattgefunden hat, und das gleichzeitig die Abnahme des Melkzeuges unterbindet.

## Patentansprüche

1. Verfahren zum selbsttätigen Ausmelken beim maschinellen Milchentzug, bei dem die in eine elastisches Zitzengummi des Melkbechers eingeführte Zitze (2) einem vorbestimmten Unterdruck ausgesetzt wird, an einem Zwischenraum zwischen einem Melkbechergehäuse und dem die Zitze (2) umschließenden Zitzengummi ein pulsierender Unterdruck angelegt wird, eine fortlaufende Milchflußmessung vorgenommen und die Melkintensität in Abhängigkeit von dem Meßergebnis herabgesetzt wird, dadurch gekennzeichnet, daß die fortlaufende Messung die Änderung des Milchflusses pro Zeiteinheit erfaßt und die Herabsetzung der Melkintensität unmittelbar nach einer während einer Zeitdauer von 5 bis 10 Sekunden festgestellten Abnahme des Milchflusses von mehr als 1 kg/min² erfolgt.

2. Verfahren zum selbsttätigen Ausmelken beim maschinellen Milchentzug, bei dem die in ein elastisches Zitzengummi des Melkbechers eingeführte Zitze (2) einem vorbestimmten Unterdruck ausgesetzt wird und an einen Zwischenraum zwischen einem Melkbechergehäuse und dem die Zitze (2) umschließenden Zitzengummi ein pulsierender Unterdruck angelegt wird, fortlaufend die Messung eines Melkparameters vorgenommen und die Melkintensität in Abhängigkeit von dem Meßergebnis herabgesetzt wird, dadurch gekennzeichnet, daß die fortlaufende Messung den Druck im Kopfinnenraum (6) des Zitzengummis unterhalb der gegen die Zitze (2) anliegenden Dichtlippe (5) erfaßt und daß die Herabsetzung der Melkintensität beim Beginn eines Absinkens dieses Druckes erfolgt.

3. Verfahren nach Anspruch 1 oder 2, dadurch gekennzeichnet, daß die Melkintensität dadurch herabgesetzt wird, daß der Unterdruck an der Zitze (2) verringert wird.

4. Verfahren nach einem der Ansprüche 1 bis 3, dadurch gekennzeichnet, daß die Melkintensität dadurch herabgesetzt wird, daß die Pulsatorfrequenz des Unterdrucks im Zwischenraum zwischen Melkbechergehäuse und Zitzengummi erhöht wird.

5. Verfahren nach einem der Ansprüche 1 bis 4, dadurch gekennzeichnet, daß die Melkintensität dadurch herabgesetzt wird, daß das Pulsatorphasenverhältnis zwischen Saugphase und Entlastungsphase verringert wird.

6. Verfahren nach einem der Ansprüche 1 bis 5, dadurch gekennzeichnet, daß die Melkintensität dadurch herabgesetzt wird, daß der Pulsatorunterdruck in dem Zwischenraum verringert wird.

7. Verfahren nach einem der Ansprüche 1 bis 5, dadurch gekennzeichnet, daß bei Ausbleiben einer Herabsetzung der Melkintensität während einer Zeit von 6 bis 8 Minuten nach Beginn des Melkvorganges oder nach Unterschreiten eines Milchflusses von 0,2 kg/min ein Signal erzeugt wird.

## Claims

1. Method for automatic milking during mechanical removal of milk, in which the teat (2) inserted into a resilient teat inflation of the milking cups is subjected to a predetermined sub-pressure, a pulsating sub-pressure is established in an intermediate chamber between a milking cup housing and the teat inflation surrounding the teat (2), a continuous milk flow measurement is undertaken and the intensity of the milking action is decreased in dependence upon the result of the measurement, characterised in this that the continuous measurement monitors the change in the milk flow in unit time and the decrease in the milking intensity takes place immediately after there has been established a reduction in the milk flow of more than 1 kg/min² over a period of five to ten seconds.

2. Method for automatic milking during mechanical removal of milk, in which the teat (2) introduced into a resilient teat inflation of the milking cup is subjected to a predetermined sub-pressure and a pulsating sub-pressure is established in an intermediate chamber between a milk cup housing and the teat inflation surrounding the teat (2), continuous measurement of a milk parameter is undertaken and the intensity of milking is reduced in dependence upon the result of the measurement, characterised in this that the continuous measurement of the pressure includes the pressure in the internal space of the head (6) of the teat inflation beneath the sealing lip (5) applied against the teat (2) and that the reduction of the milking intensity takes place at the initiation of a reduction of this pressure.

3. Method according to claim 1 or 2, characterised in this that the intensity of milking is reduced in such a manner that the sub-pressure falls at the teat (2).

4. Method according to one of claims 1 to 3, characterised in this that the intensity of milking is reduced in such a manner that the frequency of the pulsating of the sub-pressure in the intermediate chamber between the milk cup housing and the teat inflation is increased.

5. Method according to one of claims 1 to 4, characterised in this that the intensity of milking is reduced in such a manner that the pulsating phase ratio between the suction phase and the relief phase is reduced.

6. Method according to one of claims 1 to 5, characterised in this that the intensity of milking is reduced in such a manner that the sub-pressure of the pulsator is reduced in the intermediate chamber.

7. Method according to one claims 1 to 5, characterised in this that on failure in a reduction of the intensity of milking during time of from six to eight minutes after commencement of the milking process or after passing a milk flow of 0.2 kg/min a signal is generated.

**Revendications**

1. Procédé pour traire à fond automatiquement lors de la traite mécanique, selon lequel le trayon (2) introduit dans un manchon-trayeur élastique du gobelet-trayeur est soumis à une dépression prédéterminée, une dépression étant appliquée par pulsations à une chambre intermédiaire disposée entre un boîtier de gobelet-trayeur et le manchon-trayeur entourant le trayon (2), une mesure du débit de lait étant effectuée en continu et l'intensité de la traite abaissée en fonction des valeurs mesurées, caractérisé par le fait que la mesur continue capte la variation du débit de lait par unité de temps et que la réduction de l'intensité de la traite intervient directement après une baisse du débit de lait de plus de 1 kg/mn$^2$ constatée pendant une durée de 5 à 10 secondes.

2. Procédé pour traire à fond lors de la traite mécanique, selon lequel le trayon (2) introduit dans un manchon-trayeur élastique du gobelet-trayeur est soumis à une dépression prédéterminée, une dépression étant appliquée par pulsation à une chambre intermédiaire disposée entre un boîtier de gobelet-trayeur et le manchon-trayeur entourant le trayon (2), une mesure du débit de lait étant effectuée en continu et l'intensité de la traite abaissée en fonction des valeurs mesurées, caractérisé par le fait que la mesure effectuée en continu capte la pression dans la chambre intérieure supérieure (6) du manchon-trayeur au-dessous de la lèvre d'étanchéité (5) appliquée contre le trayon (2) et que la réduction de l'intensité de la traite intervient au début d'une baisse de cette pression.

3. Procédé selon l'une des revendications 1 et 2, caractérisé par le fait que l'intensité de la traite est diminuée par la réduction de la dépression appliquée au trayon (2).

4. Procédé selon l'une des revendications 1 à 3, caractérisé par le fait que l'intensité de la traite est diminuée par une augmentation de la fréquence avec laquelle les pulsations de dépression sont appliquées à la chambre intermédiaire entre boîtier de gobelet-tayeur et manchon-trayeur.

5. Procédé selon l'une des revendications 1 à 4, caractérisé par le fait que l'intensité de la traite est diminuée par réduction au pulsateur durapport entre phase d'aspiration et phase de décharge.

6. Procédé selon l'une des revendications 1 à 5, caractérisé par le fait que l'intensité de la traite est diminuée par réduction dans la chambre intermédiaire de la dépression pulsée.

7. Procédé selon l'une des revendications 1 à 5, caractérisé par le fait que lorsqu'il y a absence de réduction d'intensité de traite après 6 à 8 mn de traite ou lorsque le débit de lait est inférieur à 0,2 kg/mn, un signal est émis.

# fig. 1

a)  b)  c)  d)

fig.2

fig.3

# fig.4

fig. 5

MILCHFLUSS (kg/min)

ZEIT (min)

P